# FASCICULE DE BREVET EUROPEEN

(11) **EP 1 122 049 B1**
(45) Date de publication et mention de la délivrance du brevet: **21.04.2004**
(21) Numéro de dépôt: 01400248.9
(22) Date de dépôt: 01.02.2001
(51) Int. Cl.: B29C 45/14

(54) **Procédé de fabrication d'une pièce en matière plastique comportant un film décoratif, et pièce ainsi obtenue**
Verfahren zur Herstellung eines Kunstoffteils mit Dekorfolie und danach erhaltenes Teil
Method for manufacturing a plastic part having a decorative film and thus obtained part

(30) Priorité: 02.02.2000 FR 0001304
(43) Date de publication de la demande: 08.08.2001
(73) Titulaire: COMPAGNIE PLASTIC OMNIUM, 69007 Lyon (FR)
(72) Inventeur: Hilmarcher, Olivier, 01460 Montreal-La-Cluse (FR)
(74) Mandataire: Remy, Vincent Noel Paul

(56) Documents cités:
- WO-A-92/12008
- WO-A-94/03337
- US-A- 5 916 643

## Description

La présente invention concerne la fabrication de pièces en matière plastique par le procédé appelé *insert molding*, consistant à mettre en forme une structure multicouche de faible épaisseur, à la découper éventuellement pour lui donner le contour de la pièce à réaliser et à. la placer dans un moule, puis à surmouler sur cette structure multicouche, localement ou sur l'ensemble de sa surface, une masse en matière thermoplastique de manière à produire une pièce en matière plastique décorée.

Dans le domaine automobile, la structure multicouche doit comporter sur sa face extérieure une couche d'un matériau particulièrement résistant, destiné notamment à assurer la protection vis-à-vis du milieu extérieur.

Il a ainsi été proposé d'utiliser pour former la couche la plus extérieure un alliage de PVDF et de PMMA.

Le PVDF présente les avantages de pouvoir subir une élongation importante lors d'une opération de thermoformage et de satisfaire les contraintes de durabilité dans le domaine automobile.

Le PMMA permet de minimiser la perte de brillance lors de l'opération de thermoformage et d'augmenter la transparence et le degré de D.O.I. (*Distinctiveness of Image*) de la couche extérieure.

La structure multicouche comporte par ailleurs une couche de support destinée à lui conférer une certaine tenue mécanique et à lui permettre de conserver sensiblement sa forme après l'opération de thermoformage jusqu'à sa mise en place dans le moule.

Cette couche de support peut également apporter de la couleur.

Elle est relativement épaisse et dans les structures multicouches connues présente une épaisseur de 400 à 800 µm.

La structure multicouche peut comporter entre la couche de support et la couche de protection une couche décorative colorée dans la masse.

On connaît ainsi des structures multicouche dans lesquelles la couche de protection est constituée par un alliage de PVDF (polyfluorure de vinylidène) et PMMA (polymétacrylate de méthyle) transparent, la couche de support est constituée par de l'ABS ou du PP (polypropylène) et la couche de décoration est constituée par une couche d'un alliage de PVDF et de PMMA colorée dans la masse.

La couche de protection est éventuellement imprimée au moyen d'encres conventionnelles, non réactivables à chaud.

Pour assurer la cohésion de la couche de support et de la couche de décoration, on utilise dans les structures multicouches connues une couche de liant PU (polyuréthane) de faible épaisseur, car l'accrochage direct de la couche de décoration sur la couche de support serait difficile à obtenir sinon, compte tenu de la présence de PVDF peu compatible avec le polymère utilisé pour réaliser la couche de support.

On connaît par le brevet US 5 916 643 un procédé dans lequel la couche de protection est réalisée sur un film de support amovible par un procédé d'enduction de type *reverse roll coating*. La couche de protection est assemblée à une couche sous-jacente par passage entre des cylindres portés à une température élevée, d'environ 200-220 °C, afin d'activer un adhésif permettant l'assemblage des deux couches.

On connaît par la demande internationale WO94/03337 un procédé dans lequel le film est mis en forme dans la cavité du moule dans lequel la matière thermoplastique est surmoulée. Il ne s'agit donc pas d'un procédé *d'insert molding*.

La présente invention a pour objet de simplifier la fabrication de pièces par procédé *insert molding*.

L'invention y parvient grâce à un nouveau procédé de fabrication, caractérisé par le fait qu'il comporte les étapes suivantes :
- réaliser une structure multicouche comportant au moins une couche de protection satisfaisant aux contraintes d'utilisation dans le domaine automobile et une couche de support destinée à assurer la tenue mécanique de la structure multicouche après sa mise en forme, en assemblant la couche de protection et la couche de support directement ou avec interposition d'une ou plusieurs couches de décoration intermédiaires, cet assemblage étant effectué par un procédé dans lequel l'une au moins des couches à assembler est dans un état au moins partiellement fondu de manière à permettre un assemblage par fusion locale de matière,
- mettre en forme, de préférence par thermoformage, la structure multicouche de manière à lui conférer une forme non plane,
- la découper éventuellement,
- la placer dans un moule,
- surmouler de la matière thermoplastique sur une face de la structure multicouche, localement ou sur la totalité de sa surface, et
- extraire l'ensemble du moule.

Le procédé selon l'invention permet d'éviter l'utilisation de liant lors de l'assemblage d'au moins deux couches, cet assemblage s'effectuant par fusion locale de matière.

La fabrication du film multicouche s'en trouve ainsi simplifiée.

La mise en forme de la structure multicouche est réalisée en dehors du moule dans lequel la matière thermoplastique est surmoulée, conformément au procédé *d'insert molding*.

De préférence, la couche qui est dans un état au moins partiellement fondu, par exemple la couche de support, pour être amenée au contact de la couche avec laquelle elle doit être assemblée, sort d'une extrudeuse.

De préférence, l'assemblage de la couche de protection et de la couche de support est réalisé par plaxage ou calandrage-couchage.

Préalablement à leur assemblage, au moins l'une de la couche de protection et de la couche de support est avantageusement tendue, de préférence au moyen d'un élément rotatif en forme générale de banane.

On évite ainsi la formation de plis lors de l'assemblage.

Avantageusement, la structure multicouche comporte au moins trois couches, à savoir une couche de protection, au moins une couche de décoration et une couche de support.

Dans un exemple de mise en oeuvre, la structure multicouche comporte trois couches, à savoir une couche de protection, une couche de décoration et une couche de support.

On peut utiliser pour réaliser la couche de protection des matières plastiques transparentes telles que PMMA, PC, PVDF et autres polymères fluorés, PA (polyamides), ABS, PS (polystyrène), PP métallocènes, PET, polymères de la famille des acryliques, alliages comprenant un ou plusieurs polymères choisi dans la liste ci-dessus, co-polymères comprenant un ou plusieurs polymères choisis dans la liste ci-dessus, ou des assemblages de polymères choisis dans la liste ci-dessus, par exemple une couche de PVDF et une couche de PC ou une couche de PVDF et une couche de PMMA. Il est particulièrement avantageux d'utiliser du PA.

La couche de protection peut se présenter sous la forme d'un film monocouche, étant de préférence obtenue par extrusion d'une matière plastique.

La couche de protection est de préférence réalisée à base d'un alliage de deux polymères, de préférence un alliage de PVDF et de PMMA.

En variante, la couche de protection peut se présenter sous la forme d'un film bicouche, de préférence obtenu par co-extrusion de deux matières plastiques. La couche extérieure du film bicouche est avantageusement réalisée dans un matériau tel qu'un polymère fluoré, de préférence du PVDF.

On utilisera avantageusement pour la couche intérieure du film bicouche un matériau plus facile à décorer ou à assembler, compatible avec celui employé pour constituer la couche sous-jacente de la structure multicouche, afin de permettre un assemblage sans utiliser de liant, par un procédé tel que le plaxage, le laminage à chaud, le doublage, le couchage ou le calandrage.

De préférence, la couche intérieure est réalisée à base de PMMA.

Lorsque la couche de protection comporte du PMMA, son épaisseur est de préférence inférieure à 150 µm pour ne pas lui conférer un caractère cassant.

La couche de support peut avoir par exemple soit une structure monocouche, soit une structure bicouche, et l'on peut utiliser pour réaliser la couche de support des matières plastiques telles que de l'ABS (acrylonitrile butadiène styrène), des polyoléfines (PP, PE ...), du PET (polytéréphtalate), du PC (polycarbonate), des alliages comprenant un ou plusieurs polymères choisis dans la liste ci-dessus.

La couche de support est de préférence réalisée à base de PP ou d'ABS.

Dans le cas où la couche de support présente une structure bicouche, la couche supérieure est avantageusement teintée, présente une épaisseur de quelques µm, ce qui permet d'utiliser une couche inférieure non teintée, moins coûteuse.

La couche supérieure peut également être réalisée dans un matériau permettant de faciliter l'adhésion de la couche sous-jacente à la couche de protection ou de décoration, ce matériau pouvant être coloré ou non.

La couche supérieure peut être réalisée à base de PP modifié teinté masse et la couche inférieure à base de PP.

La couche de décoration est constituée par exemple par au moins une couche d'encre réactivable à chaud, de préférence de nature acrylique, déposée sur la face intérieure de la couche de protection ou sur la couche de support, l'encre étant de préférence déposée par un procédé d'impression par héliogravure.

D'autres procédés tels que la flexographie, la sérigraphie ou l'offset peuvent également être mis en oeuvre.

La couche de support ou de protection peut recevoir des encres différentes en vue d'imprimer un motif par exemple.

L'impression peut être réalisée par passes successives avec différentes encres, la dernière passe pouvant s'appliquer sur toute la surface de la couche de support ou de protection afin de lui conférer une teinte de fond.

On peut éviter les problèmes d'accrochage éventuels de l'encre en utilisant par exemple, pour constituer la couche de protection, un film bicouche dont la couche extérieure est constituée par un polymère fluoré et la couche intérieure par un polymère compatible avec l'encre.

Les encres réactivables à chaud précitées comprennent avantageusement un composant fusible à chaud.

L'invention a encore pour objet une structure multicouche utilisée pour mettre en oeuvre le procédé défini plus haut.

L'invention a encore pour objet une pièce en matière plastique réalisée au moyen du procédé précité, notamment une pièce de carrosserie automobile.

L'invention sera mieux comprise à la lecture de la description détaillée qui va suivre, d'exemples de mise en oeuvre non limitatifs, et à l'examen du dessin annexé, sur lequel :
- les figures 1 à 5 illustrent le procédé *insert molding*,
- les figures 6 à 10 représentent de manière schématique, en section, différentes configurations de structure multicouche selon l'invention,
- la figure 11 illustre de manière schématique le procédé d'héliogravure,
- les figures 12 et 13 illustrent de manière schématique deux variantes du procédé de plaxage,
- la figure 14 représente isolément, en perspective et de manière schématique, un élément rotatif utilisé pour tendre le film, et
- la figure 15 illustre schématiquement le procédé de calandrage-couchage.

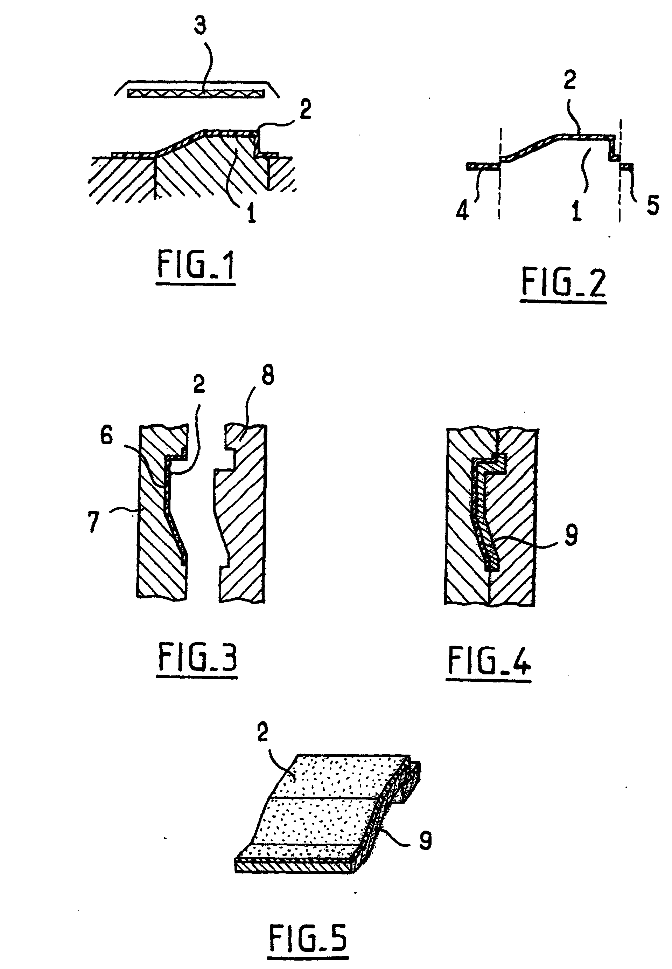

Le procédé *insert molding* consiste, dans l'exemple illustré, à fournir une structure multicouche dont la nature sera précisée dans la suite, se présentant initialement sous la forme d'un film 2, à placer ce film 2 sur un poinçon de thermoformage 1 dont le relief est choisi en fonction de la pièce à réaliser et à chauffer le film 2 à l'aide d'un moyen de chauffage 3 pour le mettre en forme, comme illustré sur la figure 1.

Une fois thermoformé, le film 2 appelé préforme peut être découpé comme illustré sur la figure 2 pour éliminer des parties 4 et 5 non utiles et faire correspondre le contour de la préforme 2 avec celui de la pièce à réaliser.

Le film 2 est ensuite transporté dans un moule comportant deux parties 7 et 8.

Le film 2 est placé dans le fond de l'empreinte 6 de la première partie 7 du moule, comme illustré sur la figure 3.

La deuxième partie 8 est apte à constituer avec la première, lorsque plaquée sur cette dernière, une cavité de moule, comme représenté sur la figure 4.

De la matière thermoplastique fondue est injectée dans la cavité de moule ainsi formée, au contact de la face du film 2 opposée à l'empreinte 6.

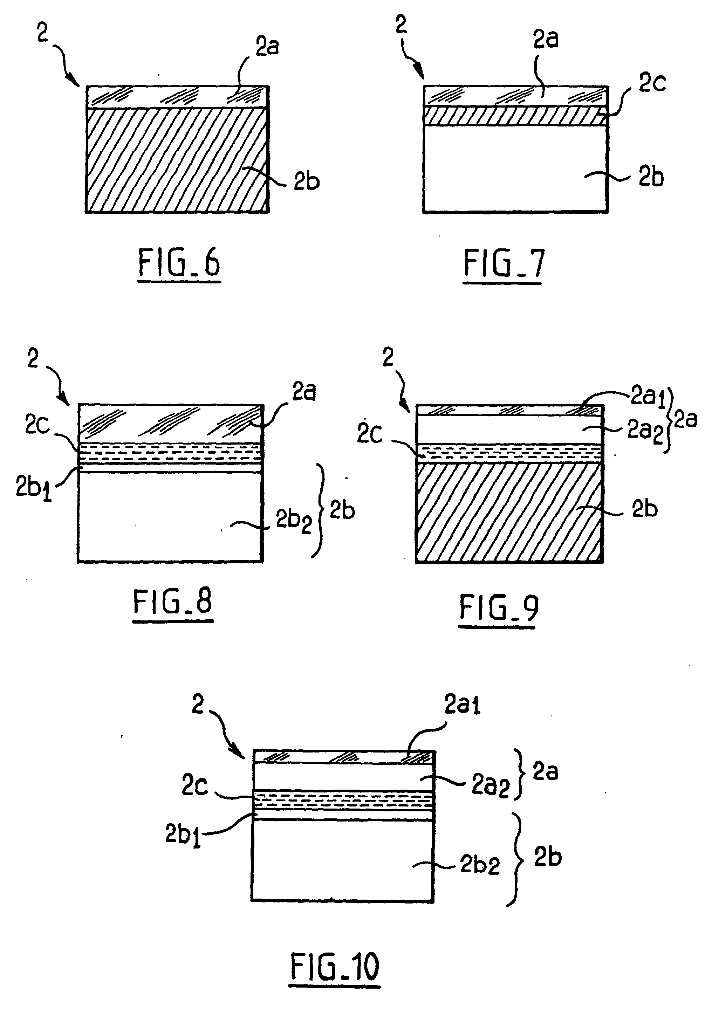

La pièce extraite du moule, représentée sur la figure 5, présente une forme non plane, dont une face est définie par le film 2.

La matière thermoplastique 9, une fois refroidie, assure la tenue mécanique de cette pièce tandis que le film 2 constitue une protection et une décoration et évite d'avoir à peindre la pièce.

On peut réaliser par ce procédé tous types de pièces automobiles, par exemple une calandre, un bandeau de pare-chocs, une aile, etc.

On va maintenant décrire en référence aux figures 6 à 10 différents exemples non limitatifs de structure pour le film 2.

D'une manière générale, le film 2 comporte au moins une couche de protection et une couche de support.

La couche de protection est destinée à rendre la pièce, après surmoulage de matière thermoplastique, compatible avec une utilisation dans le domaine automobile.

Cette couche de protection présente :
- une bonne adhérence avec la couche sous-jacente (mesurée par le test dit de quadrillage),
- une bonne résistance à l'action des brosses de lavage et une bonne tenue au nettoyage à haute pression,
- une bonne résistance contre les projections de gravillons, notamment lorsque le véhicule roule à vitesse élevée, entre 200 et 250 km/h par exemple,
- une bonne protection vis-à-vis des fluides, notamment des carburants (essence, gazole), des liquides de nettoyage destinés au lavage des vitres, et des produits de conditionnement et de déconditionnement, par exemple les cires utilisées pour protéger les pièces avant leur montage,
- une bonne résistance au vieillissement, à la lumière, aux intempéries, à la chaleur et à l'humidité,
- une bonne résistance vis-à-vis des rayures,
- une bonne tenue vis-à-vis des cycles climatiques, notamment les variations de température, et
- un bon comportement à l'élongation lors du thermoformage.

L'épaisseur de la couche de protection est par exemple de quelques dizaines de µm.

La couche de support est destinée à permettre à la préforme de conserver sa forme après l'opération de thermoformage et son transport au moule dans lequel est surmoulée la matière thermoplastique, et de résister également aux courants de matière plastique dans le moule lors du surmoulage.

L'épaisseur de la couche de support est par exemple de quelques centaines de µm.

Dans le cas de la figure 6, le film 2 comporte une couche de protection transparente 2a et une couche de support 2b teintée dans la masse.

Dans l'exemple de la figure 7, le film 2 comporte une couche de protection 2a, une couche de support 2b dont la couleur peut être quelconque et une couche de décoration 2c prise en sandwich entre les couches de protection 2a et de support 2b.

Eventuellement la couche de support 2b est colorée et la couche de décoration 2c partiellement transparente.

La couche de décoration 2c est constituée par exemple par des lignes imprimées sur la couche de protection 2a ou la couche de support 2b afin de conférer à la pièce l'aspect de l'aluminium brossé.

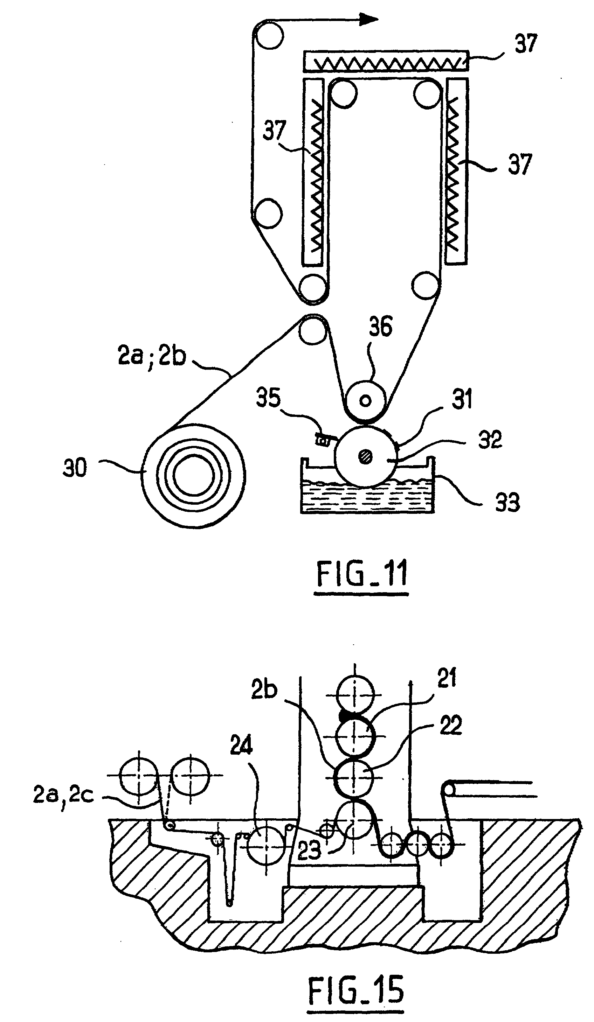

Dans l'exemple décrit, la couche de décoration 2c est imprimée sur la couche de protection ou sur la couche de support par un procédé d'héliogravure, comme illustré à la figure 11.

La couche de protection 2a ou la couche de support 2b est déroulée à partir d'une bobine 30 et amenée par sa face destinée à être imprimée au contact d'une surface gravée 31 d'un cylindre 32 en rotation.

La surface gravée 31 se charge en encre en étant partiellement immergée dans un bac 33 contenant l'encre, lorsque le cylindre 32 tourne.

Une racle 35 disposée à proximité du cylindre 32 permet de racler l'encre sur la surface gravée 31 de manière à contrôler la quantité d'encre venant recouvrir la surface de la couche de protection 2a ou la couche de support 2b, laquelle subit l'impression en passant entre le cylindre 32 et un cylindre presseur 36.

Après l'impression, la couche de protection 2a ou la couche de support 2b est envoyée dans un dispositif de séchage comportant une pluralité de souffleurs d'air 37.

La couleur de fond est apportée dans l'exemple considéré par la couche de support 2b, teintée en gris par exemple.

En variante, la couleur de fond peut être réalisée en effectuant une passe d'encre venant recouvrir toute la surface du support 2b.

La couche de décoration 2c peut correspondre à une ou plusieurs impressions d'encres réactivables à chaud.

Dans le cas où plusieurs encres sont utilisées, les différentes encres peuvent ne pas être superposées mais simplement juxtaposées, constituant ainsi une couche unique.

Plusieurs stations d'héliogravures peuvent être utilisées à la suite les unes des autres.

Dans un souci de simplification du dessin, on a toujours représenté sur les figures la couche de décoration 2c sous la forme d'une couche unique.

Le film multicouche peut présenter d'autres configurations que celles illustrées sur les figures 6 et 7.

Dans l'exemple de la figure 8, le film 2 comporte une couche de protection 2a, une couche de support 2b et une couche de décoration 2c.

La couche de support 2b présente une structure bicouche formée de deux couches 2b₁ et 2b₂.

La couche supérieure 2b₁ peut servir à apporter la couleur de fond et à faciliter l'adhésion des couches 2c et 2b tandis que la couche inférieure 2b₂ peut être de couleur quelconque.

La couche de support 2b, qu'elle soit monocouche ou bicouche, est réalisée de préférence à base de PP ou d'ABS.

En variante, elle peut être réalisée à base de PE, PET ou PC.

Comme indiqué plus haut, la couche de décoration 2c peut être formée par une ou plusieurs impressions sur la couche de support et/ou la couche de protection, au moyen d'encres réactivables à chaud, et les couches d'encres peuvent se superposer ou ne former qu'une couche unique.

La couche de protection 2a présente dans l'exemple de la figure 8 une structure monocouche et est réalisée par extrusion à partir d'un alliage de PVDF et de PMMA.

Dans l'exemple de la figure 9, le film 2 comporte une couche de protection 2a, une couche de support 2b et une couche de décoration 2c, la couche de support 2b étant éventuellement colorée dans la masse de manière à constituer un fond coloré et la couche de décoration étant constituée par une ou plusieurs couches d'encre déposées par impression sur la couche de protection 2a ou sur la couche de support 2b.

La couche de protection 2a présente ici une structure bicouche 2a₁, 2a₂.

La couche supérieure 2a₁ est destinée à conférer de la résistance vis-à-vis du milieu extérieur tandis que la couche inférieure 2a₂ facilite l'accrochage de la ou des encres réactivables à chaud de la couche de décoration 2c.

La couche de protection 2a peut être réalisée par co-extrusion de deux matières plastiques, la couche supérieure 2a₁ de ce film bicouche étant avantageusement constituée, comme c'est le cas dans l'exemple décrit, par un polymère fluoré, de préférence du PVDF, et la couche inférieure 2a₂ étant constituée de préférence par du PMMA.

L'épaisseur de la couche supérieure 2a₁ est par exemple de quelques µm et celle de la couche inférieure 2a₂ de quelques dizaines de µm.

Dans l'exemple de la figure 10, le film 2 comporte une couche de protection 2a présentant une structure bicouche 2a₁, 2a₂ à l'instar du film 2 de la figure 9, une couche de décoration 2c et une couche de support 2b présentant également une structure bicouche 2b₁, 2b₂ à l'instar du film 2 de la figure 8.

D'une manière générale, dans le cas où la couche de protection ou la couche de support sont réalisées au moins en ce qui concerne leur face à décorer dans un matériau qui en raison de sa nature chimique rend difficile l'accrochage de l'encre, la couche de protection ou la couche de support reçoivent avant l'opération d'impression un traitement de surface destiné à améliorer l'accrochage de l'encre, par exemple un traitement chimique tel qu'un traitement d'oxydation chromique ou d'oxydation par des organométalliques, un traitement à la flamme, un traitement électromagnétique, un traitement par irradiation UV, bombardement d'électrons ou d'ions, un traitement corona ou plasma, cette liste n'étant pas limitative.

En particulier, ces traitements de surface sont particulièrement recommandés lorsque la couche de protection ou la couche de support comportent des polymères de la famille des polyoléfines.

Pour assembler la couche de protection et la couche de support, on procède de préférence par plaxage, lequel est ici synonyme de laminage à chaud.

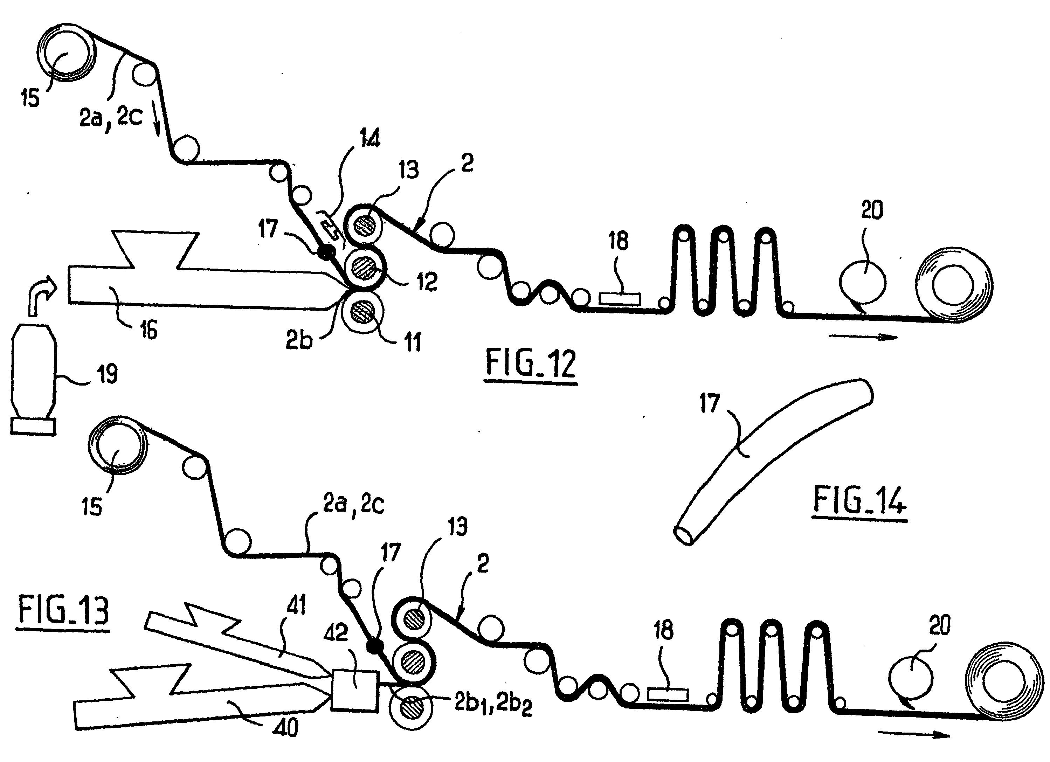

Le procédé de plaxage est illustré sur les figures 12 et 13.

La figure 12 concerne la réalisation du film de la figure 7, comportant une couche de protection monocouche ayant une face décorée, assemblée avec la couche de support également monocouche.

La couche de protection décorée 2a, 2c est déroulée à partir d'une bobine de stockage 15 et amenée par sa face décorée, laquelle comporte des encres réactivables à chaud, au contact de la couche de support 2b sortant d'une extrudeuse 16, le contact s'effectuant entre des cylindres 11 et 12 entraînés en rotation.

Avant son passage entre les cylindres 11 et 12, la couche de protection décorée 2a, 2c est tendue au moyen d'un élément rotatif 17 en forme générale de banane, représenté isolément sur la figure 14.

La couche de protection décorée 2a, 2c passe alternativement dans le creux puis sur la bosse de l'élément rotatif 17, ce qui permet de la tendre.

On évite ainsi que des plis accidentels de la couche 2a, 2c ne se forment lors de son passage entre les cylindres 11 et 12.

Un dispositif de séchage 19 permet de sécher la matière avant son envoi dans l'extrudeuse.

La ou les encres de la couche de protection décorée 2a, 2c sont dans l'exemple décrit chauffées au moyen d'un rayonnement infrarouge par une rampe 14, et la couche de support 2b est encore chaude, de sorte que lorsqu'elles viennent en contact, la couche de protection décorée 2a, 2c et la couche de support 2b s'assemblent par fusion locale de matière.

En variante la rampe 14 peut être supprimée.

Les cylindres 11 et 12 sont portés dans l'exemple décrit à une température peu élevée, inférieure à 100 °C, de préférence comprise entre 60 °C et 90 °C environ, n'étant pas nécessaires au chauffage des couches à assembler, la matière sortant de l'extrudeuse 16 étant chaude, à une température supérieure à 160 °C dans l'exemple décrit.

La température des cylindres 11, 12 et 13 est par exemple de 60, 90 et 35 °C.

Le film assemblé passe entre le cylindre 12 et un cylindre de sortie 13 puis est dirigé vers un dispositif 18 destiné à contrôler son épaisseur.

Le film 2 passe ensuite dans un dispositif de découpe 20 permettant de découper ses bords de la laize afin d'obtenir la largeur souhaitée.

Les chutes peuvent être broyées puis ré-incorporées dans la chaîne de production ou stockées.

Le procédé qui vient d'être décrit s'applique également lorsque l'on remplace la couche de protection décorée, enroulée sur la bobine de stockage 15, par la couche de support, éventuellement décorée, et que l'on extrude la couche de protection au moyen de l'extrudeuse 16.

Ce procédé s'applique encore lorsque la couche extrudée présente une structure multicouche, comme illustré par exemple sur la figure 13.

Sur cette figure, on réalise la couche de support 2b₁, 2b₂ par coextrusion de deux matières plastiques au moyen d'extrudeuses 40 et 41 débitant dans un adaptateur rhéologique 42 ou "Feed Block".

La structure bicouche 2b₁, 2b₂ extrudée est assemblée avec une couche de protection 2a, à l'instar de l'exemple de la figure 12.

Ce procédé s'applique encore lorsque l'on remplace la couche de protection 2a par la couche de support 2b et que l'on extrude une couche de protection ayant une structure bicouche 2a₁, 2a₂.

On a illustré sur la figure 15 le procédé de calandrage-couchage, dans lequel la couche de protection décorée 2a, 2c est amenée par sa face décorée au contact d'une couche de support 2b calandrée, issue d'une extrudeuse et du passage entre des rouleaux 21 et 22, le contact et l'assemblage de la couche de protection décorée 2a, 2c et de la couche de support s'effectuant entre des rouleaux 22 et 23.

Précédemment à sa venue au contact de la couche de support 2b, la couche de protection décorée 2a, 2c est réchauffée au moyen d'un tambour de chauffage 24.

Ce tambour de chauffage 24 vise à réactiver par chauffage la couche de protection décorée 2a, 2c avant son assemblage avec la couche de support 2b.

La couche de protection 2a peut présenter une structure multicouche.

En variante, c'est la couche de support qui est décorée à la place de la couche de protection et c'est cette dernière qui est calandrée entre les rouleaux 21 et 22 et couchée sur la couche de support décorée.

La couche de support peut présenter dans ce cas une structure multicouche comme illustré par exemple sur la figure 8.

### EXEMPLE 1.

On a réalisé un film ayant la structure suivante :

Couche de protection 2a : alliage PVDF/PMMA, épaisseur 55 µm.

Couche de décoration 2c : épaisseur 8 µm.

Couche de support 2b: ABS, épaisseur 500 µm.

On a commencé par réaliser par extrusion le film d'alliage PVDF/PMMA à partir de 32 % de PVDF et 68 % de PMMA en poids sans calandrage.

Le film obtenu a été imprimé par héliogravure au moyen d'une installation comportant trois stations, la première station comportant un cylindre "aluminium brossé" destiné à l'impression de fines lignes discontinues blanchâtres. La première impression ne couvre pas la totalité de la surface du film.

La deuxième station comporte un cylindre "1000 points, trame 40 électro-mécanique", pour imprimer une couche de fond gris argent métallisé.

La troisième station comporte également un cylindre "1000 points, trame 40 électro-mécanique" pour imprimer une autre couche de fond gris argent métallisé.

Une quatrième station aurait pu être utilisée pour déposer une couche de fond supplémentaire afin notamment d'augmenter le pouvoir couvrant global de la couche de fond.

La viscosité de l'encre utilisée était de 18 cp et la température de séchage de 80 °C.

On a procédé ensuite au plaxage du film selon le procédé décrit en référence à la figure 12.

On a extrudé de l'ABS destiné à constituer la couche de support, de référence TERLURAN 997 VE commercialisé par la société BASF.

L'ABS utilisé est gris, de manière à améliorer le pouvoir couvrant donné par la couche de fond imprimée.

La température de la matière en tête d'extrusion était de 226 °C.

Après thermoformage du film multicouche, on a surmoulé de l'ABS de référence ABS MAGNUM 8434 commercialisé par la société DOW, et effectué ensuite des tests de résistance à la rayure au gravillonnage, à la lumière, aux essences sans plomb, au gazole, de tenue aux fluides, de vieillissement "Weather Ometer", de résistance au lavage par nettoyeur haute pression, de vieillissement à la chaleur, de vieillissement à l'humidité et de vieillissement suivant des cycles climatiques, selon les méthodes d'essai imposées par les constructeurs.

On a observé de bons résultats.

### EXEMPLE 2.

On a réalisé un film multicouche ayant la structure suivante :

Couche de protection 2a : alliage PVDF/PMMA, épaisseur 55 µm.

Couche de décoration 2c : épaisseur 8 µm.

Couche de support 2b₁, 2b₂ : 1^{ère} couche 2b₁ : PP modifié, teintée dans la masse, épaisseur 50 µm, 2^{ème} couche 2b₂ : PP non modifié 500 µm.

La couche de PP modifié, teintée dans la masse, permet de faciliter l'adhésion avec les encres de décoration.

Le PP modifié utilisé est un PP modifié MAH (Acide Maléique Anhydrique) de référence BYNEL 50 E 662 commercialisé par la société DUPONT.

La couche de PP non modifié de 500 µm d'épaisseur est chargée avec 20 % de talc et elle est commercialisée sous la référence CZN 0525NL par la société APPRYL.

Le film multicouche a été réalisé en mettant en oeuvre le procédé décrit en référence à la figure 13.

Les couches de PP modifié et de PP non modifié ont été co-extrudés simultanément avec l'utilisation d'un adaptateur rhéologique.

Des tests effectués avec le film multicouche, analogues à ceux de l'exemple 1, se sont avérés satisfaisants.

Bien entendu, l'invention n'est pas limitée aux exemples de réalisation qui viennent d'être décrits.

On peut notamment utiliser d'autres procédés d'assemblage pour assembler les couches de protection et de support, l'une de ces couches ou les deux pouvant être préalablement décorée(s) au moyen d'encres réactivables à chaud, notamment un procédé d'extrusion couchage.

La structure multicouche peut comporter plusieurs couches intermédiaires de décoration afin de produire un effet de profondeur.

## Revendications

1. Procédé de fabrication d'une pièce en matière plastique, **caractérisé par le fait qu'**il comporte les étapes suivantes :
- réaliser une structure multicouche (2) comportant au moins une couche de protection (2a) satisfaisant aux contraintes d'utilisation dans le domaine automobile et une couche de support (2b) destinée à assurer la tenue mécanique de la structure multicouche (2) après sa mise en forme, en assemblant la couche de protection et la couche de support directement ou avec interposition d'une ou plusieurs couches de décoration intermédiaires (2c), cet assemblage étant effectué par un procédé dans lequel l'une au moins des couches à assembler est dans un état au moins partiellement fondu de manière à permettre un assemblage par fusion locale de matière,
- mettre en forme, de préférence par thermoformage, la structure multicouche de manière à lui conférer une forme non plane,
- la découper éventuellement,
- la placer dans un moule,
- surmouler de la matière thermoplastique (9) sur une face de la structure multicouche, localement ou sur la totalité de sa surface, et
- extraire l'ensemble du moule.

2. Procédé selon la revendication 1, **caractérisé par le fait que** la couche qui est dans un état au moins partiellement fondu sort d'une extrudeuse.

3. Procédé selon la revendication précédente, **caractérisé par le fait que** l'assemblage de la couche de protection (2a) et de la couche de support (2b) est réalisé par plaxage.

4. Procédé selon la revendication précédente, **caractérisé par le fait que**, préalablement audit assemblage, au moins l'une de la couche de protection (2a) et de la couche de support (2b) est tendue, de préférence au moyen d'un élément rotatif en forme générale de banane.

5. Procédé selon la revendication 1 ou 2, **caractérisé par le fait que** l'assemblage de la couche de protection (2a) et de la couche de support (2b) est réalisé par calandrage-couchage.

6. Procédé selon l'une quelconque des revendications précédentes, **caractérisé par le fait que** la structure multicouche comporte au moins trois couches, à savoir une couche de protection (2a), au moins une couche de décoration (2c) et une couche de support (2b).

7. Procédé selon l'une quelconque des revendications précédentes, **caractérisé par le fait que** la couche de protection (2a) se présente sous la forme d'un film monocouche, de préférence obtenu par extrusion d'une matière plastique.

8. Procédé selon l'une des revendications 1 à 6, **caractérisé par le fait que** la couche de protection (2a) se présente sous la forme d'un film bicouche, de préférence obtenu par co-extrusion de deux matières plastiques.

9. Procédé selon la revendication précédente, **caractérisé par le fait que** la couche extérieure (2a₁) du film bicouche (2a) est réalisée dans un matériau tel qu'un polymère fluoré, de préférence du PVDF.

10. Procédé selon l'une des deux revendications immédiatement précédentes, **caractérisé par le fait que** la couche intérieure (2a₂) du film bicouche (2a) est réalisée dans un matériau compatible avec celui employé pour constituer la couche sous-jacente de la structure multicouche, de préférence du PMMA.

11. Procédé selon l'une quelconque des revendications précédentes, **caractérisé par le fait que** l'on utilise pour réaliser la couche de protection une ou plusieurs matières plastiques choisies dans la liste suivante : PMMA, PC, PVDF et autres polymères fluorés, PA, ABS, PS, PP métallocènes, PET, polymères de la famille des acryliques, alliages comprenant une ou plusieurs des matières précitées, co-polymères comprenant une ou plusieurs des matières précitées.

12. Procédé selon la revendication précédente, **caractérisé par le fait que** l'on utilise pour réaliser la couche de protection (2a) un alliage de deux polymères, de préférence du PVDF et du PMMA.

13. Procédé selon l'une quelconque des revendications 1 à 11, **caractérisé par le fait que** l'on utilise du PA pour réaliser la couche de protection (2a).

14. Procédé selon l'une quelconque des revendications précédentes, **caractérisé par le fait que** la couche de support (2b) présente une structure monocouche ou bicouche.

15. Procédé selon l'une quelconque des revendications précédentes, la couche de support (2b) présentant une structure bicouche, **caractérisé par le fait que** la couche supérieure (2b₁) de la couche de support (2b) est réalisée dans un matériau permettant de faciliter son adhésion à la couche de protection ou de décoration.

16. Procédé selon l'une quelconque des revendications précédentes, la couche de support (2b) présentant une structure bicouche, **caractérisé par le fait que** la couche supérieure (2b₁) de la couche de support (2b) est réalisée dans un matériau présentant une couleur.

17. Procédé selon les deux revendications précédentes, **caractérisé par le fait que** ladite couche supérieure (2b₁) est réalisée dans un matériau coloré choisi pour augmenter l'adhésion de la couche sous-jacente de la structure multicouche à la couche de protection ou de décoration.

18. Procédé selon l'une quelconque des revendications précédentes, **caractérisé par le fait que** l'on utilise pour réaliser la couche de support (2b) une ou plusieurs matières plastiques choisies dans la liste suivante : ABS, polyoléfines, notamment PP ou PE, PET, PC.

19. Procédé selon la revendication précédente, **caractérisé par le fait que** l'on utilise du PP pour réaliser la couche de support (2b).

20. Procédé selon la revendication précédente, **caractérisé par le fait que**, la couche de support (2b) présentant une structure bicouche, la couche supérieure (2b₁) est réalisée à base de PP modifié teinté masse et la couche inférieure (2b₂) à base de PP non modifié.

21. Procédé selon la revendication 18, **caractérisé par le fait que** l'on utilise de l'ABS pour réaliser la couche de support (2b).

22. Procédé selon l'une quelconque des revendications précédentes, **caractérisé par le fait que** la couche de protection (2a) est décorée.

23. Procédé selon l'une quelconque des revendications précédentes, **caractérisé par le fait que** la couche de support (2b) est décorée.

24. Procédé selon l'une quelconque des revendications précédentes, **caractérisé par le fait que** la structure multicouche comporte une couche de décoration (2c) constituée par une ou plusieurs encres réactivables à chaud, de préférence de nature acrylique, déposées sur la couche de protection (2a) ou la couche de support (2b), de préférence par un procédé d'impression.

25. Procédé selon la revendication précédente, **caractérisé par le fait que** la couche de décoration (2c) est imprimée par un procédé d'héliogravure.

26. Procédé selon l'une quelconque des revendications précédentes, **caractérisé par le fait que** l'on imprime la couche de support (2b) ou la couche de protection (2a) par passes successives avec différentes encres en vue de constituer un motif.

27. Procédé selon la revendication précédente, **caractérisé par le fait que**, lorsque la couche de support (2b) est en PP, la dernière passe d'encre s'applique sur toute la surface de la couche de support (2b).

28. Procédé selon l'une des revendications 24 à 27, **caractérisé par le fait que** la couche de protection ou la couche de support reçoit avant l'impression un traitement de surface destiné à faciliter l'accrochage de l'encre.

29. Structure multicouche (2) utilisée pour mettre en oeuvre le procédé tel que défini dans l'une quelconque des revendications précédentes.

30. Pièce en matière plastique réalisée au moyen du procédé tel que défini dans l'une quelconque des revendications 1 à 28.

## Claims

1. A method of manufacturing a plastics material part, the method being **characterized by** the fact that it comprises the following steps:
- making a multilayer structure (2) having at least one protection layer (2a) satisfying the constraints for use in the automotive field and a support layer (2b) for providing the mechanical strength of the multilayer structure (2) after it has been shaped, the structure being made by assembling the protection layer and the support layer directly or with one or more intermediate decoration layers (2c) interposed between them, said assembly being performed by a method in which at least one of the layers to be assembled is in an at least partially-melted state so as to enable assembly to be performed by local melting of material;
- shaping the multilayer structure, preferably by thermoforming, so as to give it a shape that is not plane;
- optionally trimming it;
- placing it in a mold;
- overmolding thermoplastic material (9) on one of the faces of the multilayer structure either locally or over its entire surface; and
- extracting the assembly from the mold.

2. A method according to claim 1, **characterized by** the fact that the layer which is in an at least partially melted state is exiting an extruder.

3. A method according to the preceding claim, **characterized by** the fact that the protection layer (2a) and the support layer (2b) are assembled together by hot rolling.

4. A method according to the preceding claim, **characterized by** the fact that prior to being assembled, at least one of the protection layer (2a) and the support layer (2b) is tensioned, preferably by means of a generally banana-shaped rotary element.

5. A method according to claim 1 or 2, **characterized by** the fact that the protection layer (2a) and the support layer (2b) are assembled together by calendering and surface coating.

6. A method according to any preceding claim, **characterized by** the fact that the multilayer structure has at least three layers, namely: a protection layer (2a); at least one decoration layer (2c); and a support layer (2b).

7. A method according to any preceding claim, **characterized by** the fact that the protection layer (2a) is in the form of a single layer film, preferably obtained by extruding a plastics material.

8. A method according to any one of claims 1 to 6, **characterized by** the fact that the protection layer (2a) is in the form of a two-layer film, preferably obtained by coextruding two plastics materials.

9. A method according to the preceding claim, **characterized by** the fact that the outer layer (2a₁) of the two-layer film (2a) is made out of a material such as a fluorine-containing polymer, preferably PVDF.

10. A method according to either one of the two immediately preceding claims, **characterized by** the fact that the inner layer (2a₂) of the two-layer film (2a) is made out of a material that is compatible with the material used for making the underlying layer of the multilayer structure, and preferably out of PMMA.

11. A method according to any preceding claim, **characterized by** the fact that the protection layer is made out of one or more plastics materials selected from the following list: PMMA; PC; PVDF and other fluorine-containing polymers; PA; ABS; PS; metallocene PP; PET; polymers of the acrylic family; alloys comprising one or more of the above-specified materials; and copolymers comprising one or more of the above-specified materials.

12. A method according to the preceding claim, **characterized by** the fact that the protection layer (2a) is made of an alloy of two polymers, preferably PVDF and PMMA.

13. A method according to any one of claims 1 to 11, **characterized by** the fact that PA is used for making the protection layer (2a).

14. A method according to any preceding claim, **characterized by** the fact that the support layer (2b) has a single layer or a two-layer structure.

15. A method according to any preceding claim, in which the support layer (2b) has a two-layer structure, the method **characterized by** the fact that the top layer (2b₁) of the support layer (2b) is made of a material that facilitates adhesion with the protection layer or the decoration layer.

16. A method according to any preceding claim, the support layer (2b) having a two-layer structure, the method being **characterized by** the fact that the top layer (2b₁) of the support layer (2b) is made of a material presenting a color.

17. A method according to the two preceding claims, **characterized by** the fact that the top layer (2b₁) is made or a colored material selected to increase the adhesion of the underlying layer of the multilayer structure to the protection layer or the decoration layer.

18. A method according to any preceding claim, **characterized by** the fact that the support layer (2b) is made out of one or more plastics materials selected from the following list: ABS; polyolefins, in particular PP or PE; PET; or PC.

19. A method according to the preceding claim, **characterized by** the fact that PP is used for making the support layer (2b).

20. A method according to the preceding claim, **characterized by** the fact that the support layer (2b) has a two-layer structure, the top layer (2b₁) is made on the basis of bulk-tinted modified PP and the bottom layer (2b₂) based on non-modified PP.

21. A method according to claim 18, **characterized by** the fact that ABS is used to make the support layer (2b).

22. A method according to any preceding claim, **characterized by** the fact that the protection layer (2a) is decorated.

23. A method according to any preceding claim, **characterized by** the fact that the support layer (2b) is decorated.

24. A method according to any preceding claim, **characterized by** the fact that the multilayer structure includes a decoration layer (2c) constituted by one or more hot-reactivatable inks, preferably of an acrylic nature, deposited on the protection layer (2a) or on the support layer (2b), preferably by a printing method.

25. A method according to the preceding claim, **characterized by** the fact that the decoration layer (2c) is printed by a photogravure method.

26. A method according to any preceding claim, **characterized by** the fact that the support layer (2b) or the protection layer (2a) is printed by successive passes using different inks in order to make up a pattern.

27. A method according to the preceding claim, **characterized by** the fact that for a support layer (2b) made of PP, the last ink pass applies to the entire surface of the support layer (2b).

28. A method according to any one of claims 24 to 27, **characterized by** the fact that the protection layer or the support layer receives surface treatment prior to printing in order to facilitate keying of the ink.

29. A multilayer structure (2) used for implementing the method as defined in any preceding claim.

30. A plastics material part made by means of a method as defined in any one of claims 1 to 28.

## Patentansprüche

1. Verfahren zum Herstellen eines Kunststoffteils, **dadurch gekennzeichnet, daß**
- eine mehrschichtige Struktur (2) mit wenigstens einer Schutzschicht (2a), die den Benutzungsanforderungen auf dem Kraftfahrzeuggebiet genügt, und einer Trägerschicht (2b) realisiert wird, welche die mechanische Festigkeit der mehrschichtigen Struktur (2) nach deren Formgebung sicherstellt, wobei die Schutzschicht und die Trägerschicht direkt oder unter Zwischenbringung einer oder mehrerer Dekorationszwischenschichten (2c) miteinander verbunden werden, wobei diese Verbindung dadurch realisiert wird, wenigstens eine der zu verbindenden Schichten in einen zumindest teilweise geschmolzenen Zustand zu bringen, um eine Verbindung durch lokales Schmelzen zuzulassen,
- die mehrschichtige Struktur, vorzugsweise durch Warmverformung, derart geformt wird, daß der mehrschichtigen Struktur eine unebene oder nicht-ebene Form verliehen wird,
- die mehrschichtige Struktur gegebenenfalls geschnitten wird,
- die mehrschichtige Struktur in eine Form plaziert wird,
- das thermoplastische Material (9) an einer Seite der mehrschichtigen Struktur lokal oder an deren gesamten Fläche geformt wird, und
- der Form das Ganze entnommen wird.

2. Verfahren nach Anspruch 1, **dadurch gekennzeichnet, daß** die Schicht, die sich in einem zumindest teilweise geschmolzenen Zustand befindet, aus einem Extruder gelangt.

3. Verfahren nach dem vorangegangenen Anspruch, **dadurch gekennzeichnet, daß** die Verbindung der Schutzschicht (2a) und der Trägerschicht (2b) durch Beschichtung mit Acryl realisiert wird.

4. Verfahren nach dem vorangegangenen Anspruch, **dadurch gekennzeichnet, daß**, vorzugsweise für die Verbindung, die Schutzschicht (2a) oder die Trägerschicht (2b) gespannt oder gestreckt wird, vorzugsweise mittels eines Drehbauteils im wesentlichen in Form einer Banane.

5. Verfahren nach Anspruch 1 oder 2, **dadurch gekennzeichnet, daß** die Verbindung der Schutzschicht (2a) und der Trägerschicht (2b) durch Kalandrier-Beschichten realisiert wird.

6. Verfahren nach einem der vorangegangenen Ansprüche, **dadurch gekennzeichnet, daß** die mehrschichtige Struktur wenigstens drei Schichten umfaßt, nämlich eine Schutzschicht (2a), wenigstens eine Dekorationsschicht (2c) und eine Trägerschicht (2b).

7. Verfahren nach einem der vorangegangen Ansprüche, **dadurch gekennzeichnet, daß** die Schutzschicht (2a) in Form einer dünnen Einzelschicht vorliegt, die vorzugsweise durch Extrusion eines Kunststoffs erhalten wird.

8. Verfahren nach einem der Ansprüche 1 bis 6, **dadurch gekennzeichnet, daß** die Schutzschicht (2a) in Form einer zweischichtigen dünnen Lage vorliegt, die vorzugsweise durch Koextrusion zweier Kunststoffe erhalten wird.

9. Verfahren nach dem voranstehenden Anspruch, **dadurch gekennzeichnet, daß** die Außenschicht (2a₁) der dünnen zweischichtigen Lage (2a) in einem Material realisiert wird, wie einem fluorhaltigen Polymer, vorzugsweise PVDF.

10. Verfahren nach einem der beiden unmittelbar voranstehenden Ansprüche, **dadurch gekennzeichnet, daß** die Innenschicht (2a₂) der dünnen zweischichtigen Lage (2a) in einem Material, vorzugsweise PMMA, realisiert wird, das mit demjenigen kompatibel ist, das zum Bilden der darunter liegenden Schicht der mehrschichtigen Struktur verwendet wird.

11. Verfahren nach einem der vorangegangen Ansprüche, **dadurch gekennzeichnet, daß** zum Realisieren der Schutzschicht ein oder mehrere Kunststoffe verwendet werden, die aus folgender Liste gewählt werden: PMMA, PC, PVDF und andere fluorhaltige Polymere, PA, ABS, PS, PP-Metalle, PET, Polymere der Acrylfamilie, Verbindungen mit einem oder mehreren der vorgenannten Stoffe, Kopolymere mit einem oder mehreren der vorgenannten Materialien.

12. Verfahren nach dem vorangegangenen Anspruch, **dadurch gekennzeichnet, daß** zum Realisieren der Schutzschicht (2a) eine Verbindung aus zwei Polymeren, vorzugsweise PVDF und PMMA, verwendet wird.

13. Verfahren nach einem der Ansprüche 1 bis 11, **dadurch gekennzeichnet, daß** zum Realisieren der Schutzschicht (2a) PA verwendet wird.

14. Verfahren nach einem der vorangegangenen Ansprüche, **dadurch gekennzeichnet, daß** die Trägerschicht (2b) eine Einzelschicht- oder eine Zweischichtstruktur aufweist.

15. Verfahren nach einem der vorangegangen Ansprüche, wobei die Trägerschicht (2b) eine zweischichtigte Struktur aufweist, **dadurch gekennzeichnet, daß** die obere Schicht (2b₁) der Trägerschicht (2b) in einem Material realisiert wird, das leicht an die Schutzschicht oder die Dekorationsschicht geklebt werden kann.

16. Verfahren nach einem der vorangegangenen Ansprüche, wobei die Trägerschicht (2b) eine zweischichtige Struktur aufweist, **dadurch gekennzeichnet, daß** die obere Schicht (2b₁) der Trägerschicht (2b) durch ein Material realisiert wird, das eine Farbe aufweist.

17. Verfahren nach den zwei vorangegangenen Ansprüchen, **dadurch gekennzeichnet, daß** die obere Schicht (2b₁) in einem gefärbten Material realisiert wird, das zum Erhöhen der Haftung der darunter liegenden Schicht der mehrschichtigen Struktur an der Schutzschicht oder der Dekorationsschicht ausgewählt wird.

18. Verfahren nach einem der vorangegangenen Ansprüche, **dadurch gekennzeichnet, daß** zum Realisieren der Trägerschicht (2b) ein oder mehrere Kunststoffmaterialien verwendet werden, die aus der folgenden Liste gewählt werden: ABS, Polyolefine, insbesondere PP oder PE, PET, PC.

19. Verfahren nach dem vorangegangenen Anspruch, **dadurch gekennzeichnet, daß** zum Realisieren der Trägerschicht (2b) PP verwendet wird.

20. Verfahren nach dem vorangegangenen Anspruch, **dadurch gekennzeichnet, daß** die Trägerschicht (2b) eine zweischichtige Struktur aufweist, wobei die obere Schicht (2b₁) auf der Basis einer modifizierten, gefärbten PP-Masse und die untere Schicht (2b₂) auf der Basis von nicht-modifizierten PP realisiert werden.

21. Verfahren nach Anspruch 18, **dadurch gekennzeichnet, daß** ABS verwendet wird, um die Trägerschicht (2b) zu realisieren.

22. Verfahren nach einem der vorangegangenen Ansprüche, **dadurch gekennzeichnet, daß** die Schutzschicht (2a) dekoriert wird.

23. Verfahren nach einem der vorangegangenen Ansprüche, **dadurch gekennzeichnet, daß** die Trägerschicht dekoriert wird.

24. Verfahren nach einem der vorangegangenen Ansprüche, **dadurch gekennzeichnet, daß** die mehrschichtige Struktur eine Dekorationsschicht (2c) umfaßt, die durch eine oder mehrere auf Wärme reagierbare Farben, vorzugsweise eine Art Acryl, gebildet wird, die auf der Schutzschicht (2a) oder der Trägerschicht (2b) vorzugsweise durch ein Druckverfahren aufgebracht wird.

25. Verfahren nach dem vorangegangenen Anspruch, **dadurch gekennzeichnet, daß** die Dekorationsschicht (2c) durch ein Heliogravur-Verfahren gedruckt wird.

26. Verfahren nach einem der vorangegangenen Ansprüche, **dadurch gekennzeichnet, daß** die Trägerschicht (2b) oder die Schutzschicht (2a) mittels aufeinanderfolgender Arbeitsgänge mit unterschiedlichen Farben zum Bilden eines Motivs gedruckt werden.

27. Verfahren nach dem vorangehenden Anspruch, **dadurch gekennzeichnet, daß**, wenn die Trägerschicht (2b) aus PP gebildet ist, die letzte Farblage auf der gesamten Fläche der Trägerschicht (2b) aufgebracht wird.

28. Verfahren nach einem der Ansprüche 24 bis 27, **dadurch gekennzeichnet, daß** die Schutzschicht oder die Trägerschicht vor dem Druck eine Oberflächenbehandlung erfährt, die das Haften der Farbe erleichtem kann.

29. Mehrschichtige Struktur (2) zum Durchführen des Verfahrens nach einem der vorangegangenen Ansprüche.

30. Kunststoffteil, das mittels des Verfahrens realisiert ist, das in einem der Ansprüche 1 bis 28 definiert ist.
